# EUROPEAN PATENT APPLICATION

(11) **EP 1 783 690 A2**
(43) Date of publication of application: **09.05.2007**
(21) Application number: 06123359.9
(22) Date of filing: 02.11.2006
(51) Int. Cl.: G06T 15/60

(54) **Constant point in space lateral map lighting**

(30) Priority: 03.11.2005 US 266620
(71) Applicant: Honeywell International Inc., Morristown, NJ 07962 (US)
(72) Inventor: Gannon, Aaron J., Anthem, MD Maryland 85086-1686 (US); Rye, Jeffrey M., Minneapolis, MN Minnesota 55410 (US); Dorneich, Michael C., St. Paul, MN Minnesota 55105 (US); Ververs, Patricia M., Ellicott City, MD Maryland 21043 (US)
(74) Representative: Haley, Stephen

(57) **Abstract**

A method of providing perspective depth information on a computer screen. The method includes generating light and dark areas so that it appears to the observer a light source is illuminating the information from an imaginary point in space. The method further includes maintaining the appearance of the light Source from the imaginary point in space when the information displayed on the computer screen is rotated in relation to the observer.

## Description

The present invention relates generally to the presentation of information on computer screens and in particular to the illumination to convey perspective depth information on a computer screen.

Images provided on computer screens convey depths with the use of light and dark areas. The light areas are perceived by an observer as areas that a light is shining on and the dark areas are perceived by an observer as areas where shadows are present. For an observer to perceive depth information correctly the light and shadow areas must be placed in a uniform pattern. That is, the display must convey to the observer that a light source that is lighting the computer screen is coming from a select direction. An example of a computer screen in which the need to convey depth information is critical is an avionic map. An avionic map is used in an aircraft to convey depth information to flight crews so that hills and valleys can be correctly identified. The current generation of computer generated avionic lateral maps use information lighting that appears to be attached to the map. That is, as the map rotates, the lighting source rotates with the map. When the map is rotated 180 degrees from its optimal lighting origin, hills may appear as valleys and valleys may appear as hills to an observer. This has a potential to create confusion for the crew.

For the reasons stated above and for other reasons stated below which will become apparent to those skilled in the art upon reading and understanding the present specification, there is a need in the art for an improved method of providing depth information when information on a computer screen is rotated.

The above-mentioned problems of current systems are addressed by embodiments of the present invention and will be understood by reading and studying the following specification.

In one embodiment, a map lighting scheme is provided. The map lighting scheme includes a computer generated map and a light source to illuminate the map to convey perspective depth information. The light source is adapted to be fixed to an imaginary point in space such that a consistent rendering of light and dark areas that make up the perspective depth information in relation to the light source at the imaginary point occurs even with rotation of the map.

In another embodiment, a method of providing depth to information displayed on a computer screen is provided. The method includes generating light and dark areas so that it appears to the observer a light source is illuminating the information from an imaginary point in space. The method further includes maintaining the appearance of the light source from the imaginary point in space when the information displayed on the computer screen is rotated in relation to the observer.

In yet another embodiment, a method of lighting a computer generated map is provided. The method comprises projecting a light source from an imaginary fixed point is space on the map. When the map rotates in a different direction, maintaining the projection of the light source from the imaginary fixed point in space to portray consistent perspective depth information in relation to the light source at the imaginary point even when the map rotates.

In still another embodiment, a machine readable medium having instructions stored thereon for conveying information on a computer generated screen is provided. The method comprises using light and dark areas to represent perspective depth information from by a light source. Fixing the light source at an imaginary point in space and rotating the information on the computer screen while maintaining the fixed light source at the imaginary point in space so that a consistent rendering of perspective depth information occurs.

In finally another embodiment, a computer generated lateral avionic map is provided. The map comprises a means for fixing a light source that provides perspective depth information of the avionic map at a fixed imaginary point in space above the map from a point of view of an observer and a means for maintaining the light source at the fixed imaginary point in space when the map rotates from the point of view of the observer.

### In the Drawings;

The present invention can be more easily understood and further advantages and uses thereof more readily apparent, when considered in view of the description of the preferred embodiments and the following figures in which:
Figure 1 is a screen shot of a display illustrating a map being illuminated from a southwest direction, relative to the map, of the prior art;
Figure 2 is a screen shot of a display illustrating a map being illuminated from the top of the display, regardless of map orientation within the display, of one embodiment of the present invention;
Figure 3 is a screen shot of a display illustrating another example of a map being illuminated from the southwest, relative to the map, of the prior art;
Figure 4 is a screen shot of a display illustrating a map being illuminated from the top of the display, regardless of map orientation within the display, of one embodiment of the present invention;
Figure 5 is an illustration of a display screen in a cockpit where information on the display is illuminated from an imaginary point in space of one embodiment of the present invention;
Figure 6 is a block diagram of a computer system of one embodiment of the present invention; and
Figure 7 is a flow diagram of one embodiment of the present invention.

In accordance with common practice, the various described features are not drawn to scale but are drawn to emphasize specific features relevant to the present invention. Reference characters denote like elements throughout Figures and text.

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that logical, mechanical and electrical changes may be made without departing from the spirit and scope of the present invention. The following detailed description is, therefore, not to be taken in a limiting sense, and the scope of the present invention is defined only by the claims and equivalents thereof.

In embodiments of the present invention an imaginary point in space, which a lighting source provides illumination from to convey perspective depth information on a computer screen, is fixed at one location. As the information on the screen rotates, the lighting point remains at the fixed imaginary point in space. Thus, in regards to an avionic map, as the plane changes direction and the map rotates, the crew can still count on the lighting source always remaining in the same place, relative to the screen thus providing for a consistent rendering of hills and valleys that provide the perspective depth information.

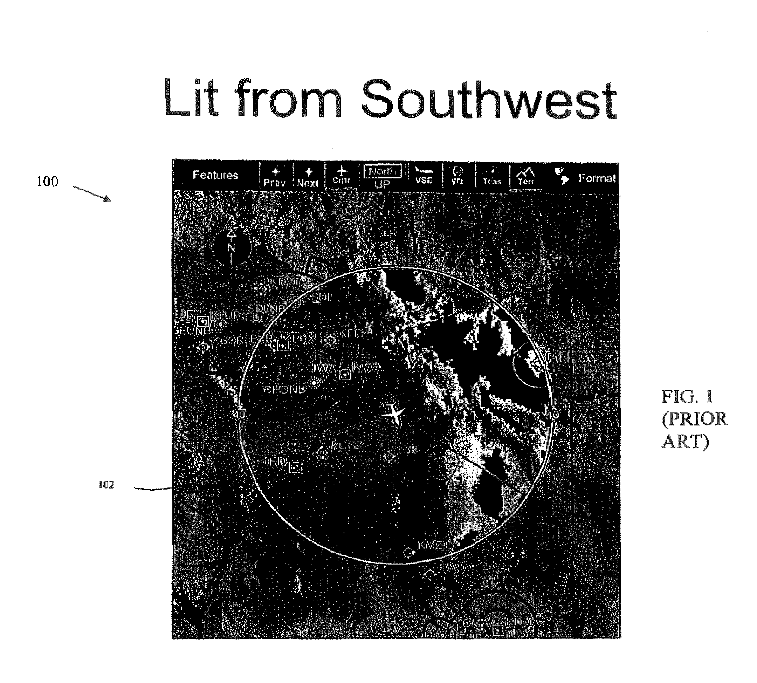

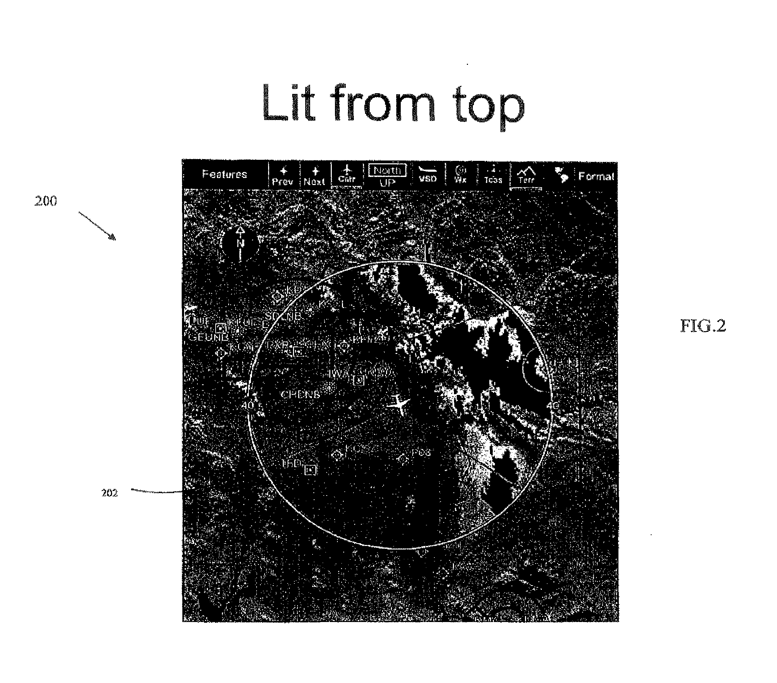

Referring to Figure 1, an example of an avionic map 100 of the prior art is provided. In this example, the map 100 is locked so that north is on the top of the screen from a perspective of an observer. The plane 102 in this example is heading in a southern direction and the lighting source of the map 100 is from the southwest. The hills and valleys of this map 100 are confusing to an observer because the observer is not accustomed to seeing perspective depth information portrayed in this manner. One embodiment of a map 200 the present invention is illustrated in Figure 2. Figure 2 illustrates the same map information (i.e. same hills and valleys) as map 100 but the light that illuminates map 200 to create the hills and valleys is from the top of the screen in respect to the observer. As illustrated, the map 200 is locked so that north is on the top in relation to the observer as the example in Figure 1. Although, plane 202 is heading in the same direction as plane 102 of Figure 1, the lighting in Figure 2 remains at the top in relation of the observer. Lighting the hills and valleys in this manner allows the observer to more accurately perceive the depth of the information. This is because people are more accustomed to perceiving accurate depth when the lighting source comes from a source on top of the information from the point of view of the person.

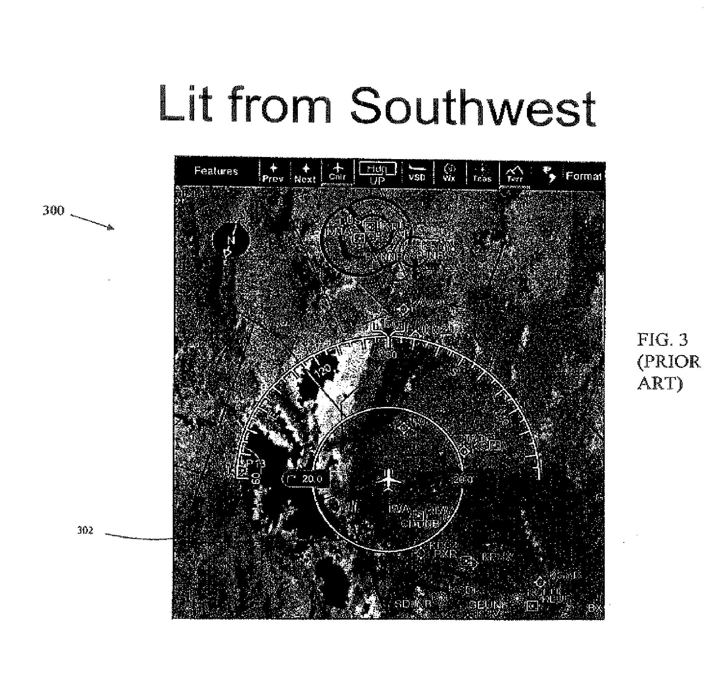

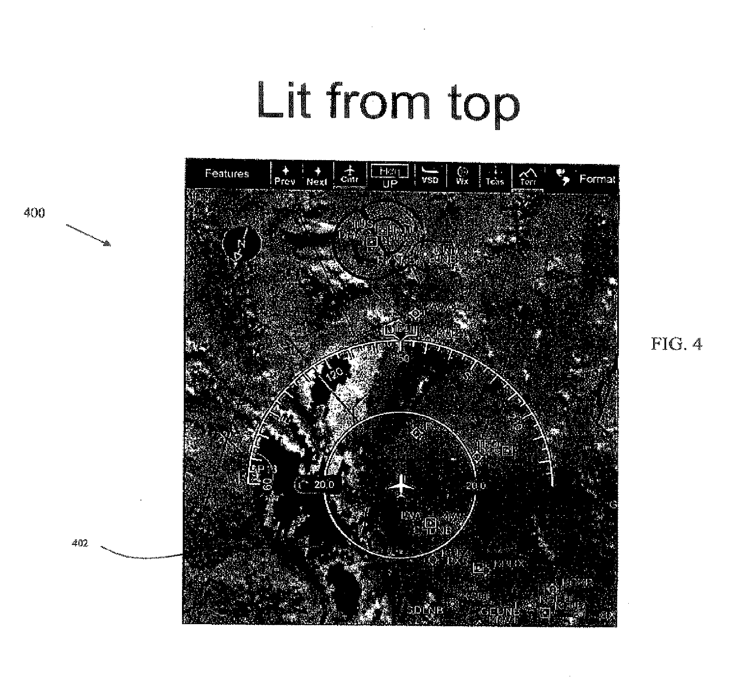

Another example of a map 300 of the prior art is illustrated in Figure 3. In this example, the map 300 is locked in the heading direction so that the plane 302 is always heading to the top of the screen in relation to an observer. The map 300 of this example is lit from the southwest. As with the first example, it is difficult for an observer to distinguish between hills and valleys because people are not accustomed to depth being presented in this manner. Referring to Figure 4, another embodiment of a map 400 of the present invention is provided. The information (hills, valleys and aircraft 402) in map 400 is the same information provided in map 300 of Figure 3, however, the information is presented to the observer by lighting the map 400 from the top of the screen in relation to the observer. As illustrated, map 400 provides an observer a more accurate portrayal of the hills and valleys.

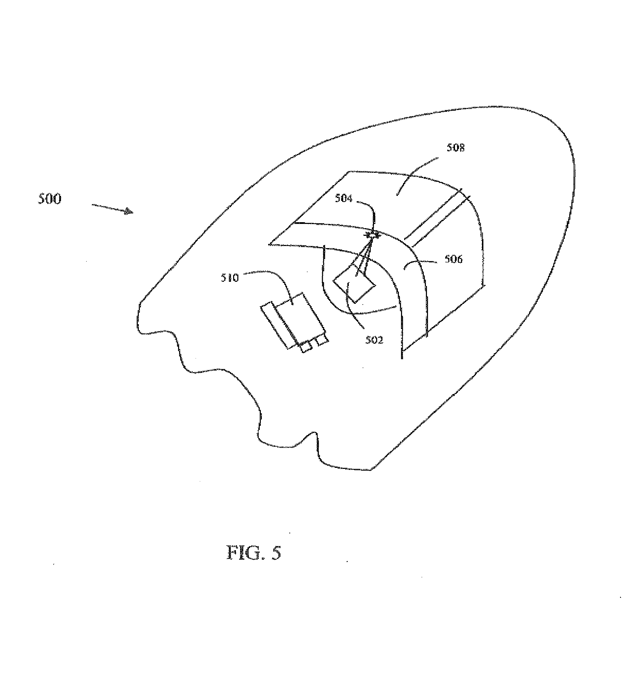

Figure 5 illustrates a representation of an aircraft cockpit 500 employing a map 502 of one embodiment of the present invention. As illustrated, the cockpit 500 includes a seat 510 upon which a crew member (observer) observes the map 502. Also illustrated, are windows 508 and glare shield 506. In embodiments of the present invention, the light source of the map 502 is fixed at an imaginary fixed point 504 in space in the cockpit 500. The imaginary point 504, in this embodiment, is positioned in top of and to the left of the map in relation to the observer, Moreover, in one embodiment, the imaginary point is on the glare shield 506 of the cockpit. In another embodiment the imaginary point in space is on top of the map. Moreover, in embodiments of the present invention, when the map rotates in response to a change in direction of the aircraft, the imaginary point remains fixed.

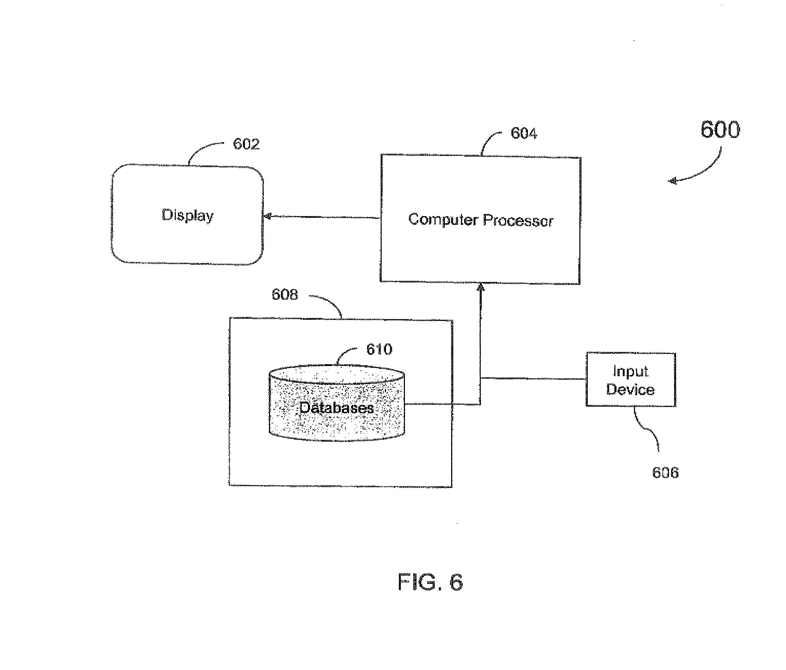

Figure 6, illustrates a computer system 600 of one embodiment of the present invention. Computer system 600 includes a display in which information such as map information is displayed. Computer system 600 also includes a computer processor 604. The computer processor 604 obtains information (such as map information including latitude, longitude and terrain height) from databases 610 in a storage medium 608. The processor 604 then process the information along with depth information so that the information will appear on the display 602 as if it was illuminated from a light source at the fixed location even if the information is rotated in relation to the display or the direction of an aircraft changes. Further included in the computer system 600 is an input device 606. The input device 606 allows an operator to enter parameters such as setting a map so that north is on the top or so the map tracks the path of the aircraft.

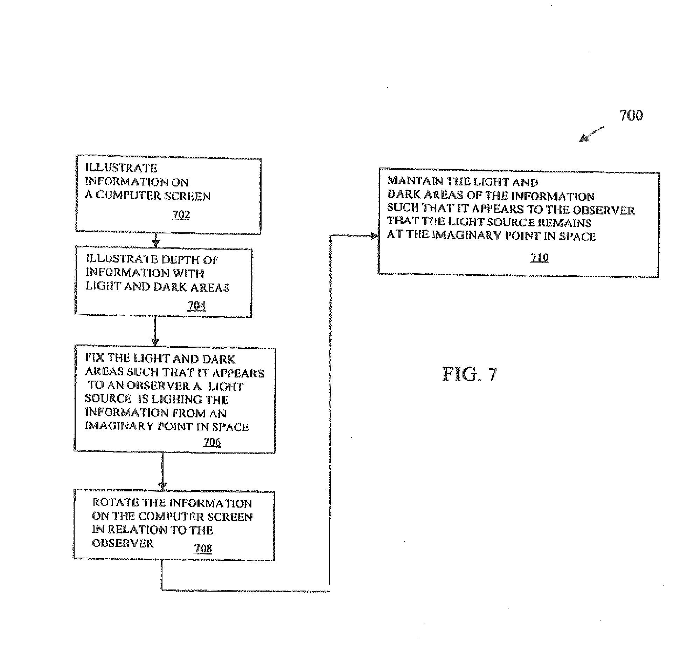

Referring to Figure 7, a flow diagram 700 of one embodiment of the present invention is illustrated. The flow diagram 700 begins by illustrating information, such as a map, on a computer display or screen (702). Depth of the information is represented with light and dark areas (704). In the map example the depth illustrates hills and valleys. The light and dark areas are positioned so that it appears to an observer of the display that a light source is lighting the information from an imaginary point in space (706). The information on the display can be rotated in relation to the observer (708). In the avionic map example, the rotation of the information could be the rotation of the map as the aircraft changes direction or the rotation of the aircraft. Maintaining the light and dark areas such that it appears to the observer that the light source remains at the imaginary point in space (710). For example, the side of hills on a map that face the light source will always be brighter than the side of the hills not facing the light source even as the map, and hence the hills, are rotated. In embodiments of the present invention, the imaginary point is to the top of the display in relation to the observer and in one embodiment it is to the top and left of the display in relation to the observer.

As stated above, the methods and techniques described here are implemented by a computer system. Embodiments of the computer system may be implemented in digital electronic circuitry, or with a programmable processor (for example, a special-purpose processor or a general-purpose process such as a computer firmware, software, or in combinations of them. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random access memory. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magnetooptical disks; and CD-ROM disks. Any of the foregoing may be supplemented by, or incorporated in, specially-designed application-specific integrated circuits (ASICs).

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A map lighting scheme comprising:
a computer generated map(200,502); and
a light source (504) to illuminate the map to convey perspective depth information, the light source (504) adapted to be fixed to an imaginary point in space such that a consistent rendering of light and dark areas that make up the perspective depth information in relation to the light source at the imaginary point occurs even with rotation of the map.

2. The map lighting scheme of claim 1, wherein the imaginary point in space is located at a point to the top of the map (502) from the point of view of an observer of the map.

3. The map lighting scheme of claim 1, wherein the imaginary point in space is located at a point to the top and left of the map (502) from a point of view of an observer of the map.

4. The lighting scheme of claim 1, wherein the computer generated map (200, 502) is an avionic map.

5. The lighting scheme of claim 4, wherein the imaginary point in space is located along the glare shield (506) in a cockpit of an aircraft (500).

6. The lighting scheme of claim 5, wherein the imaginary point in space is located to the top and left of the map (502) on the glare shield (506).

7. A method of lighting a computer generated map (700), the method comprising:
projecting a light source from an imaginary fixed point in space on the map (706); and
when the map rotates in a different direction, maintaining the projection of the light source from the imaginary fixed point in space to portray consistent perspective depth information in relation to the light source at the imaginary point even when the map rotates (710).

8. The method of claim 7, wherein projecting the light source from an imaginary fixed point (504) in space on the map (706) further comprises:
projecting the light source from an imaginary point in space (504) that is to the top of the map (502) from a point of view of an observer.

9. The method of claim 7, wherein projecting the light source from an imaginary fixed point in space (504) on the map further comprises:
projecting the light source from an imaginary point in space (504) that is to the top and to the left of the map (502) from a point of view of an observer.
